# EUROPÄISCHE PATENTANMELDUNG

(11) **EP 1 574 368 A1**
(43) Veröffentlichungstag der Anmeldung: **14.09.2005**
(21) Anmeldenummer: 05101615.2
(22) Anmeldetag: 02.03.2005
(51) Int. Cl.: B60G 17/015, B60G 21/10

(54) **Zweispur-Fahrzeug mit Pannenlaufreifen**

(30) Priorität: 11.03.2004 DE 102004011948; 28.07.2004 DE 102004036559
(71) Anmelder: Bayerische Motoren Werke Aktiengesellschaft, 80809 München (DE)
(72) Erfinder: Fries, Andreas, 83052, Bruckmühl (DE)

(57) **Zusammenfassung**

Die Erfindung betrifft ein Zweispur-Fahrzeug mit Luftreifen, insbesondere Pannenlaufreifen, und mit einem Fahrwerk-Verstellsystem an zumindest einer der zumindest zwei Fahrzeug-Achsen, mit dem die vom Aufbau zur Fahrbahn übertragene Radlast an zumindest einem Reifen dieser Achse verändert werden kann. Im Falle einer von einer Überwachungseinheit erkannten Reifenpanne wird hierdurch ausgelöst die Radlast am defekten Reifen verringert und/oder die Radlast am anderen Reifen dieser Achse erhöht und/oder die Radlast am auf der gleichen Fahrzeug-Seite wie der defekte Reifen liegenden Reifen der anderen Fahrzeug-Achse erhöht. Wenn das Fahrzeug mit Luftfederung an zumindest einer Fahrzeug-Achse ausgestattet ist, wird eine Verringerung der Radlast durch Ablassen von Luft aus der diesem Rad/Reifen zugeordneten Luftfeder erreicht, während zur Erhöhung der Radlast an einem Reifen die diesem zugeordnete Luftfeder aufgepumpt wird. Es kann sich beim Fahrwerk-Verstellsystem aber auch um ein Wank-Stabilisierungssystem oder ein Wank- und Nick-Stabilisierungssystem handeln, bei welchem Quer-Stabilisatoren tordierbar sind oder Stützfeder-Einheiten zwischen den Rädern und dem FahrzeugAufbau verstellbar sind, um die Radlast an einzelnen Rädern wie gewünscht zu beeinflussen.

## Beschreibung

Die Erfindung betrifft ein Zweispur-Fahrzeug mit Luftreifen, insbesondere mit Pannenlaufreifen, und einem Fahrwerk-Verstellsystem an zumindest einer Fahrzeug-Achse, mit dem die vom Aufbau zur Fahrbahn übertragene Radlast an zumindest einem Rad oder Reifen dieser Achse verändert werden kann.

Zweispurige Kraftfahrzeuge mit Fahrwerk-Verstellsystemen, mit denen die vom Aufbau zur Fahrbahn übertragene Radlast am ersten Reifen einer Achse vergrößert und die entsprechende Radlast am zweiten Reifen dieser Achse verringert werden kann, indem der Fahrzeug-Aufbau gegenüber der Fahrbahn geneigt eingestellt wird, sind grundsätzlich bekannt. Genannt seien hier Wank-Stabilisierungssysteme, bei welchen die Quer-Stabilisatoren geeignet tordierbar sind, oder Wank- und Nick-Stabilisierungssysteme, bei denen sog. Stützfeder-Einheiten, die zwischen den Rädern und dem Fahrzeug-Aufbau vorgesehen sind und auch Dämpfer enthalten können, geeignet im wesentlichen in Vertikalrichtung verstellbar sind, so dass im jeweiligen Abstützbereich der Fzg.-Aufbau gegenüber den jeweiligen Rade angehoben oder abgesenkt wird.

Grundsätzlich bekannt sind auch Kraftfahrzeuge mit Luftfederung. Bekanntermaßen kann dabei die Höhe des Fahrzeugs-Aufbaus gegenüber der Fahrbahn durch Zufuhr bzw. Abfuhr von Luft in die bzw. aus den Luftfedern der einzelnen Fahrzeug-Räder in gewissen Grenzen variiert bzw. eingestellt werden. Eine solche Veränderung der in den Luftfedern der einzelnen Fzg.-Räder befindlichen Luftmasse verursacht naturgemäß auch eine entsprechende Änderung der am jeweiligen Rad anliegenden Radlast, d.h. der über das Rad vom Fahrzeug-Aufbau im wesentlichen in Vertikalrichtung zur Fahrbahn übertragenen Kraft. In Verbindung mit der Luftfederung ebenfalls bekannt ist ein sog. Niveauausgleich, der bei gegenüber der Fahrbahn-Oberfläche geneigtem Fahrzeug-Aufbau bevorzugt selbsttätig durchgeführt wird und wobei versucht wird, durch Zufuhr bzw. Abfuhr von Luft aus den jeweiligen Luftfedern eine zur Fahrbahn-Oberfläche im wesentlichen parallele Lage des Fahrzeug-Aufbaus zu erzielen, d.h. dass der sog. Höhenstand, der den Längs-Abstand zwischen bspw. dem Anlenkpunktes eines sog. Luftfederbeines am Fahrzeug-Aufbau und dem Anlenkpunkt des Luftfederbeines am jeweiligen Radträger beschreibt, für alle Räder des Fahrzeugs im wesentlichen gleich ist.

Weiterer bekannter Stand der Technik, mit dem sich die vorliegende Erfindung vorzugsweise befasst, sind die sog. Pannenlaufreifen. Im Gegensatz zu den einfachen bekannten Luftreifen kann mit diesen Pannenlaufreifen oder auch Notlaufreifen auch dann noch weitergefahren werden, wenn die Luft aus diesen Reifen im wesentlichen entwichen ist, d.h. wenn diese Reifen "platt" sind. Die maximale Laufstrecke sowie die Höchstgeschwindigkeit im sog. Plattrollfall sind dabei selbstverständlich beschränkt, dennoch sind derartige Reifen ein erheblicher Fortschritt gegenüber den einfachen Luftreifen, mit denen im Falle eines "Plattens" das Fahrzeug relativ sicher zumeist nur noch zum Stillstand gebracht werden kann.

Hiermit soll nun aufgezeigt werden, wie die Beanspruchung eines Luftreifens, insbesondere eines Pannenlaufreifens, im sog. Plattrollfall, d.h. wenn praktisch kein Luftdruck oder nur ein deutlich verringerter Luftdruck im Reifen vorhanden ist, herabgesetzt werden kann, so dass dann bspw. eine längere Strecke gefahren werden kann, als dies bislang üblich ist (= Aufgabe der vorliegenden Erfindung). Dabei sei ausdrücklich darauf hingewiesen, dass diese Erfindung nicht zwangsläufig auf ein Vorhandensein von sog. Pannenlaufreifen, die auch als "Runflat-Reifen" bekannt sind, beschränkt ist; vielmehr sind die positiven Auswirkungen, die sich bei Anwendung der vorliegenden Erfindung einstellen, auch für übliche Luftreifen relevant.

Die Lösung dieser Aufgabe ist für ein Zweispur-Fahrzeug mit Luftreifen, insbesondere mit Pannenlaufreifen, und einem Fahrwerk-Verstellsystem an zumindest einer Fahrzeug-Achse, mit dem die vom Aufbau zur Fahrbahn übertragene Radlast an zumindest einem Rad oder Reifen dieser Achse verändert werden kann, dadurch gekennzeichnet, dass im Falle einer von einer Überwachungseinheit erkannten Reifenpanne hierdurch ausgelöst die Radlast am defekten Reifen verringert und/oder die Radlast am anderen Reifen dieser Achse erhöht wird und/oder die Radlast am auf der gleichen Fahrzeug-Seite wie der defekte Reifen liegenden Reifen der anderen Fahrzeug-Achse erhöht wird.

Erfindungsgemäß erfolgt im sog. Plattrollfall sowie in hiermit vergleichbaren Zuständen, d.h. dann, wenn eine Reifenpanne erkannt wird, selbsttätig als Folge hiervon eine Reduzierung der Radlast an diesem defekten Reifen, um die Belastung dieses Reifens zu reduzieren, wodurch längere Notlaufstrecken ermöglicht werden bzw. wodurch es möglich ist, einen sog. Pannenlaufreifen, der für eine bestimmte Notlaufstrecke ausgelegt ist, für diesen Fall weniger strapazierfähig auszubilden. Bei bekannten Pannenlaufreifen können somit die sog. Notlauf-Inserts in der Reifenseitenwand dünner ausgelegt werden, was vorteilhafterweise eine deutliche Abrollkomfortverbesserung für den Normalfahrzustand (d.h. ohne Panne) zur Folge hat.

Elektronische Überwachungseinheiten, die eine Reifenpanne bzw. einen Abfall des Luftdrucks in einem Fzg.-Luftreifen feststellen, sind ebenfalls bekannter Stand der Technik. Neben einer tatsächlichen Luftdruckmessung sowie telemetrischer Datenübermittlung sind dabei weitere Systeme bekannt, die bspw. aus im wesentlichen konstanten Unterschieden hinsichtlich der Drehzahlen der einzelnen Fzg.-Räder und/oder aus typischen Drehungleichförmigkeiten auf eine vorliegende Reifenpanne schließen. Üblicherweise sind solche Systeme in mit Pannenlaufreifen ausgerüsteten Fahrzeugen stets verbaut. Dabei gibt die entsprechende Überwachungsei n-heit im Pannenfall dem Fahrer einen entsprechenden Hinweis, damit er diese kritische Randbedingung berücksichtigen kann und insbesondere im Falle einer Ausrüstung mit Pannenlaufreifen seine Fahrweise hierauf einstellen kann.

Erfindungsgemäß wird nun ausgelöst durch eine solche genannte (oder ähnliche) Überwachungseinheit im Falle eines als defekt erkannten Reifens ein Fahrwerk-Verstellsystem, mit dem der Fahrzeug-Aufbau im Bereich einer Einzel-Radaufhängung gegenüber diesem Rade angehoben oder abgesenkt werden kann und somit die vom Aufbau zur Fahrbahn übertragene Radlast verändert werden kann, die Radlast des defekten Reifens verringert und/oder diejenige des anderen Reifens der gleichen Achse erhöht und/oder die Radlast am auf der gleichen Fahrzeug-Seite wie der defekte Reifen liegenden Reifen der anderen Fahrzeug-Achse erhöht. Eine Verringerung der Radlast des defekten Reifens wirkt sich selbstverständlich direkt vorteilhaft auf diesen aus, bzw. verringert die Belastung eines defekten Pannenlaufreifens. Indirekt stellt sich die gleiche Wirkung ein, wenn der andere Reifen bzw. das andere Rad an der gleichen Achse wie der defekte eine höhere Radlast übernimmt, da damit ein größer Anteil der gesamten von den beiden Rädern zusammen zu übertragenden Last vom nicht defekten Reifen übernommen wird. Entsprechendes lässt sich jedoch auch erzielen, wenn eine Veränderung der Radlast-Aufteilung an den beiden Rädern der anderen Achse, also derjenigen, die nicht den defekten Reifen enthält, durchgeführt wird. In diesem Falle wird die Radlast des auf der gleichen Fahrzeugseite wie der defekte Reifen liegenden Reifens der anderen Achse erhöht. Bereits hierdurch, zusätzlich verstärkt dadurch, dass die Radlast des anderen (nicht defekten) Reifens auf der selben Achse wie der defekte Reifen erhöht wird, wird somit die Radlast in der nicht den defekten Reifen enthaltenden Diagonalen in der Fzg.-Horizontalebene erhöht, wodurch der in der anderen Diagonalen liegende defekte Reifen entlastet wird.

Beispielsweise sei der Reifen des linken Hinterrads des zweispurigen, zweiachsigen Fahrzeugs defekt. Dann kann zunächst die Radlast dieses defekten Reifens (links hinten) verringert werden. Zusätzlich oder alternativ kann die Radlast des rechten Hinterrades und/oder des linken Vorderrades erhöht werden. Eine Veränderung der Radlast an den Hinterrädern alleine dürfte insbesondere dann vorgenommen werden, wenn alleine die Hinterachse mit einem entsprechenden Fahrwerk-Verstellsystem ausgerüstet ist, bspw. wenn das Fahrzeug nur an der Hinterachse mit Luftfederung ausgestattet ist. Ist jedoch an beiden Fzg.-Achsen ein geeignetes, entsprechendes Fahrwerk-Verstellsystem vorgesehen, so werden vorzugsweise sämtliche der genannten Maßnahmen ergriffen. Dabei geht mit einer Erhöhung der Radlast an den genannten nicht defekten Reifen automatisch eine Verringerung der Radlast am defekten Reifen einher. Mit einer Verringerung der Radlast des defekten Reifens wird dieser somit geringer belastet und kann daher über eine längere Strecke im defekten Zustand gefahren werden. Es steht gleichzeitig ein deutliches Potential zur Verbesserung des Abrollkomforts insbesondere bei Pannenlaufreifen durch Radlast- und Sturzreduzierung zur Verfügung.

Wesentlich ist, dass für das erfindungsgemäße Verfahren, nämlich die Veränderung der Radlast eines als defekt erkannten Reifens durch geeignete Veränderung des Höhenstandes des Fahrzeug-Aufbaus an diesem Rade und/oder an anderen Rädern gegenüber der Fahrbahn das Erkennen eines defekten Reifens durch eine Überwachungseinheit das auslösende Signal ist. Dieses von einer elektronischen Überwachungseinheit kommende Signal wird dann bspw. über einen Datenbus an ein das entsprechende Fahrwerk-Verstellsystem geeignet ansteuerndes Steuergerät übermittelt, welches daraufhin die entsprechenden Maßnahmen veranlasst.

Wie bereits eingangs erwähnt, kann es sich bei derartigen Fahrwerk-Verstellsystemen, mit Hilfe derer die Radlasten an einzelnen Rädern bzw. Reifen in gewünschter (beschriebener) Weise veränderbar sind, bspw. um Wank-Stabilisierungssysteme handeln, bei welchen die Quer-Stabilisatoren geeignet tordierbar sind. Alternativ sind auch Wank- und Nick-Stabilisierungssysteme möglich, bei denen sog. Stützfeder-Einheiten, die zwischen den Rädern und dem Fahrzeug-Aufbau vorgesehen sind und die auch Dämpfer enthalten können, geeignet im wesentlichen in Vertikalrichtung verstellbar sind, so dass im jeweiligen Abstützbereich der Fzg.-Aufbau gegenüber den jeweiligen Rade angehoben oder abgesenkt und dementsprechend die jeweilige Radlast verändert wird.

Ferner kann es sich bei einem entsprechenden Fahrwerk-Verstellsystem - wie ebenfalls bereits erwähnt wurde - um ein Luftfeder-System handeln, und zwar sowohl um eine Einachs-Luftfederung als auch um eine Zweiachs-Luftfederung. Wenn also ein Reifen als defekt erkannt wird, wird ausgelöst durch eine bereits genannte Überwachungseinheit aus der diesem defekten Reifen zugeordneten Luftfeder Luft abgelassen oder es wird in die Luftfeder des anderen, dem defekten Reifen gegenüberliegenden Reifens dieser Achse zusätzliche Luft hineingepumpt, wobei diese beiden Maßnahmen (bevorzugt) auch nebeneinander durchgeführt werden können. Diese Maßnahmen haben zur Folge, dass die Radlast, d.h. die zwischen Reifen und Fahrbahn übertragenen Kräfte am defekten Reifen verringert und am gegenüberliegenden Reifen dieser Achse erhöht wird bzw. werden. Entsprechendes kann in der nicht den defekten Reifen enthaltenden "Diagonale" der Fahrzeug-Horizontalebene und somit am auf der gleichen Fzg.-Seite wie der defekte Reifen liegenden Reifen der anderen Fzg.-Achse durchgeführt werden, wenn dieser bzw. dessen Achse (ebenfalls) mit Luftfederung ausgerüstet ist, d.h. im Falle einer Reifenpanne kann die Radlast am genannten Reifen der anderen Achse durch Aufpumpen der diesem zugeordneten Luftfeder erhöht werden.

Eingangs bereits erwähnt wurde als bekannter Stand der Technik ein sog. selbsttätiger Niveauausgleich bei einem Fahrzeug mit Luftfederung. Ist ein solcher bzw. eine entsprechende Ansteuerung am Fahrzeug implementiert, so veranlasst diese(r) entsprechendes, jedoch in deutlich verringertem Umfang, da der mögliche Arbeitsbereich eines automatischen Niveauausgleiches aus Sicherheits- und Stabilitätsgründen erheblich eingeschränkt ist. Mit der vorliegenden Erfindung erfolgen erheblich stärkere Eingriffe in die Luftfedercharakteristik durch erheblich umfangreichere Luftabfuhr aus bzw. Luftzufuhr in die jeweilige Luftfeder als bei einem üblichen Niveauausgleich, jedoch kann durchaus ein solcher üblicher Niveauausgleich dem erfindungsgemäßen Verfahren überlagert sein bzw. umgekehrt letzteres einem automatischen Niveauausgleich. Entsprechendes gilt selbstverständlich für ein Fahrwerk-Verstellsystem in Form eines Wank- und Nick-Stabilisierungssystems. Ferner kann im Falle einer erkannten Reifenpanne noch eine Plausibilisierung bspw. über eine Höhenstandsmessung am jeweiligen bzw. an allen Fahrzeugrädern erfolgen, welche an sich - wie eingangs geschildert - bekannter Stand der Technik ist. Eine derartige Plausibilisierung kann im Falle einer Luftfederung jedoch auch über eine Messung des jeweiligen Luftfederdruckes erfolgen, wobei abschließend noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Zweispur-Fahrzeug mit Luftreifen, insbesondere mit Pannenlaufreifen, und einem Fahrwerk-Verstellsystem an zumindest einer der zumindest zwei Fahrzeug-Achsen, mit dem die vom Aufbau zur Fahrbahn übertragene Radlast an zumindest einem Rad oder Reifen dieser Achse verändert werden kann,
**dadurch gekennzeichnet, dass** im Falle einer von einer Überwachungseinheit erkannten Reifenpanne hierdurch ausgelöst die Radlast am defekten Reifen verringert und/oder die Radlast am anderen Reifen dieser Achse erhöht wird und/oder die Radlast am auf der gleichen Fahrzeug-Seite wie der defekte Reifen liegenden Reifen der anderen Fahrzeug-Achse erhöht wird.

2. Fahrzeug nach Anspruch 1,
**dadurch gekennzeichnet, dass** das Fahrzeug mit Luftfederung an zumindest einer Fahrzeug-Achse ausgestattet ist und dass eine Verringerung der Radlast durch Ablassen von Luft aus der diesem Rad/Reifen zugeordneten Luftfeder erreicht wird, während zur Erhöhung der Radlast an einem Reifen die diesem zugeordnete Luftfeder aufgepumpt wird.

3. Fahrzeug nach Anspruch 2,
**dadurch gekennzeichnet, dass** die durch eine erkannte Reifenpanne hervorgerufene Veränderung der jeweiligen Luftfeder-Charakteristik einem automatischen Niveauausgleich mit entsprechender Veränderung der Luftfeder-Charakteristik überlagert ist.

4. Fahrzeug nach einem der vorangegangenen Ansprüche,
**dadurch gekennzeichnet, dass** es sich beim Fahrwerk-Verstellsystem um ein Wank-Stabilisierungssystem oder ein Wank- und Nick-Stabilisierungssystem handelt, bei welchem Quer-Stabilisatoren tordierbar sind oder Stützfeder-Einheiten zwischen den Rädern und dem Fahrzeug-Aufbau verstellbar sind.

5. Fahrzeug nach einem der vorangegangenen Ansprüche,
**dadurch gekennzeichnet, dass** bei erkannter Reifenpanne eine Plausibilisierung über eine Höhenstandsmessung oder im Falle einer Luftfederung über eine Messung des Luftfederdruckes erfolgt.

## Geänderte Patentansprüche

### Geänderte Patentansprüche gemäss Regel 86(2) EPÜ.

**1.** Zweispur-Fahrzeug mit Luftreifen, insbesondere mit Pannenlaufreifen, und einem Fahrwerk-Verstellsystem an zumindest einer der zumindest zwei Fahrzeug-Achsen, mit dem im Falle einer Reifenpanne die Radlast am defekten Reifen verringert wird,
**dadurch gekennzeichnet, dass** das Fahrzeug mit Luftfederung an zumindest einer Fahrzeug-Achse ausgestattet ist und dass eine Verringerung der Radlast durch Ablassen von Luft aus der diesem Rad/Reifen zugeordneten Luftfeder erreicht wird,

**2.** Zweispur-Fahrzeug mit Luftreifen, insbesondere mit Pannenlaufteifen, und einem Fahrwerk-Verstellsystem an zumindest einer der zumindest zwei Fahrzeug-Achsen, mit dem im Falle einer Reifenpanne die Radlast am defekten Reifen verringert wird,
**dadurch gekennzeichnet, dass** es sich beim Fahrwerk-Verstellsystem um ein Wank-Stabilisierungssystem oder ein Wank- und Nick-Stabilisierungssystem handelt, bei welchem Stützfeder-Einheiten zwischen den Rädem und dem Fahrzeug-Aufbau verstellbar sind.

**3.** Fahrzeug nach Anspruch 1 oder 2,
**dadurch gekennzeichnet, dass** im Falle einer von einer Überwachungseinheit erkannten Reifenpanne hierdurch ausgelöst nicht nur die Radlast am defekten Reifen verringert und die Radlast am anderen Reifen dieser Achse erhöht wird, sondern zusätzlich die Radlast am auf der gleichen Fahrzeug-Seite wie der defekte Reifen liegenden Reifen der anderen Fahrzeug-Achse erhöht wird.

**4.** Fahrzeug nach den Ansprüchen 1 und 3,
**dadurch gekennzeichnet, dass** zur Erhöhung der Radlast an einem Reifen die diesem zugeordnete Luftfeder aufgepumpt wird.

**5.** Fahrzeug nach einem der Ansprüche 1, 3, oder 4,
**dadurch gekennzeichnet, dass** die durch eine erkannte Reifenpanne hervorgerufene Veränderung der jeweiligen Luftfeder-Charakteristik einem automatischen Niveauausgleich mit entsprechender Veränderung der Luftfeder-Charakteristik überlagert ist.

**6.** Fahrzeug nach einem der vorangegangenen Ansprüche,
**dadurch gekennzeichnet, dass** bei erkannter Reifenpanne eine Plausibilisierung über eine Höhenstandsmessung oder im Falle einer Luftfederung über eine Messung des Luftfederdruckes erfolgt.
